# EUROPÄISCHE PATENTSCHRIFT

(11) **EP 0 793 530 B1**
(45) Veröffentlichungstag und Bekanntmachung des Hinweises auf die Patenterteilung: **16.09.1998**
(21) Anmeldenummer: 95941004.4
(22) Anmeldetag: 23.11.1995
(51) Int. Cl.: B01J 19/12, C08J 3/28

(54) **VERFAHREN ZUM CHEMISCHEN MODIFIZIEREN VON ALKYLGRUPPENHALTIGEN FLÜSSIGKEITEN**
PROCESS FOR CHEMICALLY MODIFYING LIQUIDS CONTAINING ALKYL GROUPS
PROCEDE DE MODIFICATION CHIMIQUE DE LIQUIDES CONTENANT DES GROUPES ALKYLE

(30) Priorität: 24.11.1994 DE 4443239
(43) Veröffentlichungstag der Anmeldung: 10.09.1997
(73) Patentinhaber: ARPLAS Gesellschaft für Plasmatechnologie mbH, 06369 Weissandt-Gölzau (DE)
(72) Erfinder: BERGER, Steffen, D-40625 Düsseldorf (DE)
(74) Vertreter: Schneider, Henry
(86) Internationale Anmeldenummer: EP9504620
(87) Internationale Veröffentlichungsnummer: WO9615852

(56) Entgegenhaltungen:
- EP-A- 0 122 289
- EP-A- 0 593 988
- WO-A-91/08047
- WO-A-95/03344
- DE-A- 4 141 805
- GB-A- 1 326 197
- PATENT ABSTRACTS OF JAPAN vol. 10 no. 235 (C-366) ,14.August 1986 & JP,A,61 069804 (HITACHI LTD.) 10.April 1986, & DATABASE WPI Section Ch, Week 8621 Derwent Publications Ltd., London, GB; Class A10, AN 86-133839 & JP,A,61 069 804 (HITACHI K.K.) , 10.April 1986
- CHEMICAL ABSTRACTS, vol. 81, no. 6, 12.August 1974 Columbus, Ohio, US; T.KAGIYA & M.HAGIWARA 'Poly(tetrafluoroethelene) resin wax' Seite 41; Spalte R; & JP,A,48 078 252 (JAPAN ATOMIC ENERGY RESEARCH INSTITUTE) 20.Oktober 1973

## Beschreibung

Die Erfindung betrifft ein Verfahren zum chemischen Modifizieren von alkylgruppenhaltigen Flüssigkeiten.

Es ist bekannt, daß alkygruppenhaltige Flüssigkeiten, beispielsweise Alkylsulfanate, Fettsäuren, Fettalkohole und deren Verarbeitungsprodukte, auf vielen Gebieten eingesetzt werden können. Der Einsatz ist beispielsweise in Emulsionen und Dispersionen möglich. Für die Verarbeitbarkeit der alkylgruppenhaltigen Flüssigkeiten auf den unterschiedlichsten Einsatzgebieten müssen diese mit bestimmten, auf das jeweilige Einsatzgebiet abgestimmten Zusätzen abgemischt werden. Auf Grund der Vielzahl der möglichen Anwendungsgebiete ist ein umfassender einheitlicher Einsatz der alkylgruppenhaltigen Flüssigkeiten somit nicht möglich.

Aus Kunststoff - Taschenbuch, 25. Ausgabe, Seite 248 bis 259, ist ein Verfahren zur Nachbehandlung von alkylgruppenhaltigen Feststoffen bekannt. Hierbei wird die Oberfläche des alkylgruppenhaltigen Feststoffes, beispielsweise eine PE-Oberfläche, mittels eines Hochspannungsplasmas behandelt, um eine lokale chemische Modifizierung zu erreichen. Auf Grund dieser lokalen Oberflächenbehandlung, beispielsweise bei Formteilen, wird eine Verbesserung der Lackierbarkeit beziehungsweise Bedruckbarkeit erreicht. Hierbei ist jedoch nachteilig, daß eine zusätzliche Nachbehandlung erfolgen muß, deren Anwendung auf Grund der Bereitstellung einer Hochspannungs-Plasmaanlage für das fertige Erzeugnis nur im begrenzten Umfang möglich ist.

Aus der GB-A 132 619 7 ist ein Verfahren bekannt, mit dem die Lösungsmittelfestigkeit der Oberfläche von Polymeren mittels einer Plasmabehandlung beeinflußt werden soll. Die Polymere liegen hierbei als Folien oder als auf Träger aufgebrachte dünne Filme vor. Die Plasmabehandlung erfolgt mit einem Entladungsplasma, bei dem der zu behandelnde Stoff als Dielektrikum zwischen zwei Elektroden hindurchgeführt wird.

Die WO-A 91/08047 beschreibt ein Verfahren, bei dem Fremdatome enthaltende Kohlenwasserstoffe einer Plasmabehandlung unterzogen werden, wobei die hier verwendete Plasmabehandlung eine Hochtemperatur-Plasmabehandlung ist, mittels der die chemische Grundstruktur der behandelten Kohlenwasserstoffe verändert wird.

Aus der EP-A-593 988 ist ein Verfahren zur Behandlung von Festkörperoberflächen bekannt. Die DE-A-41 805 offenbart ein Verfahren, bei dem ein in Granulatform vorliegender thermoplastischer Kunststoff behandelt wird.

Schließlich ist aus der JP-A-61 069 804 ein Verfahren bekannt, bei dem in liquider Phase vorliegender Monomere zu deren Polymerisation plasmabehandelt werden, wobei diese während der Plasmabehandlung gekühlt werden.

Der Erfindung liegt daher die Aufgabe zugrunde, ein Verfahren der gattungsgemäßen Art zu schaffen, mit dem in einfacher und kostengünstiger Weise eine chemische Modifizierung von alkylgruppenhaltigen Flüssigkeiten möglich ist.

Erfindungsgemäß wird diese Aufgabe dadurch gelöst, daß die alkylgruppenhaltigen Flüssigkeiten einer Plasmabehandlung in einem Frequenzbereich von 10 kHz bis 10 GHz unterzogen werden. Es wurde überraschenderweise gefunden, daß durch die Plasmabehandlung innerhalb der alkylgruppenhaltigen Flüssigkeiten gezielt eine Veränderung von Materialeigenschaften herbeiführbar ist. Insbesondere lassen sich durch die Plasmabehandlung der alkylgruppenhaltigen Flüssigkeiten chemische Spezialprodukte erzielen, die auf vielfältige Weise eingesetzt werden können, ohne daß es einer chemischen Nachbehandlung bedarf. Durch die Plasmabehandlung läßt sich eine qualitativ und quantitativ höherwertige chemische Modifizierung erreichen. Ein Grad der chemischen Modifizierung der alkylgruppenhaltigen Flüssigkeiten läßt sich in einfacher Weise vorzugsweise durch eine Einstellung von Parametern der Plasmabehandlung erreichen.

In vorteilhafter Ausgestaltung der Erfindung ist vorgesehen, daß die Plasmabehandlung mit wechselnden Frequenzen, vorzugsweise mit Kombinationen verschieden hoher, wechselnder Frequenzen durchgeführt wird. So kann sehr vorteilhaft die Plasmabehandlung mit nacheinander zuschaltbaren Frequenzen, mit abwechselnd zuschaltbaren, unterschiedlich hohen Frequenzen, mit wenigstens zwei gleichzeitig zuschaltbaren, verschieden hohen Frequenzen, und sich hieraus ergebenden Kombinationen an Frequenzenzuschaltungen durchgeführt werden. Hierdurch kann die chemische Modifizierung sehr vorteilhaft auf den unterschiedlichen chemischen Aufbau der eingesetzten alkylgruppenhaltigen Flüssigkeiten sowie deren Verwendungszweck nach der chemischen Modifizierung abgestimmt werden.

In weiterer vorteilhafter Ausgestaltung der Erfindung ist vorgesehen, daß die Plasmabehandlung unter Zufuhr wenigstens eines Inertgases, beispielsweise Helium und/oder Argon, und/oder unter Zufuhr wenigstens eines Reaktionsgases, beispielsweise Sauerstoff und/oder Stickstoff, durchgeführt wird. Weiterhin bevorzugt ist, wenn die Plasmabehandlung nacheinander mit einem Inertgasplasma und wenigstens einem Reaktionsgasplasma und/oder einem Reaktionsgasplasmagemisch oder unter Zufuhr eines Gemisches aus wenigstens einem Inertgas und einem Reaktionsgas durchgeführt wird. Durch Auswahl einer auf die zu modifizierenden alkylgruppenhaltigen Flüssigkeiten abgestimmten Zusammensetzung des Prozeßgases während der Plasmabehandlung (Inertgas, Reaktionsgas, Reaktionsgasgemisch) ist es möglich, in die alkylgruppenhaltigen Flüssigkeiten die zur chemischen Modifizierung erforderlichen reaktiven Gruppen, beispielsweise Hydroxylgruppen, Karboxylgruppen, primäre und sekundäre Aminogruppen, in ausreichendem Maße einzubauen. Diese eingebauten Gruppen sind in der Lage, mit der alkylgruppenhaltigen Flüssigkeit zu reagieren und chemische Bindungen einzugehen und/oder physikalisch zu haften. Weitere einbaubare polare, aber nicht reaktive Gruppen, beispielsweise Karbonylgruppen, tertiäre Aminogruppen können ebenfalls eine Eigenschaftsänderung der alkylgruppenhaltigen Flüssigkeit bewirken. Bei der Plasmabehandlung ist eine relativ homogene Modifizierung der alkylgruppenhaltigen Flüssigkeiten mit den während der Plasmabehandlung eingebauten reaktiven beziehungsweise nichtreaktiven Gruppen möglich.

Die nach der Plasmabehandlung modifizierte alkylgruppenhaltige Flüssigkeit besitzt somit eine relativ homogene Verteilung der eingebrachten reaktiven beziehungsweise nichtreaktiven Gruppen über die gesamte Raumausdehnung der alkylgruppenhaltigen Flüssigkeit. Es sind somit alkylgruppenhaltige Flüssigkeiten jeglicher Art erzielbar, die nach der Plasmabehandlung für bestimmte Anwendungsfälle geeignet sind, wobei eine weitere nachfolgende Behandlung nicht mehr notwendig ist. Die Einstellung der alkylgruppenhaltigen Flüssigkeiten auf ihren speziellen Anwendungsfall kann in einfacher Weise durch die erfindungsgemäße Plasmabehandlung erfolgen.

In weiterer vorteilhafter Ausgestaltung der Erfindung ist vorgesehen, daß den alkylgruppenhaltigen Flüssigkeiten vor der Plasmabehandlung feste und/oder flüssige Reaktanten, Hilfs- und Zuschlagstoffe beigemischt werden. Durch dieses wahlweise Zumischen der erwähnten Reaktanten beziehungsweise Stoffe kann die chemische Modifizierung der alkylgruppenhaltigen Flüssigkeiten genau abgestimmt auf einen bestimmten Anwendungsfall erfolgen.

Weitere vorteilhafte Ausgestaltungen ergeben sich aus den übrigen, in den Unteransprüchen genannten Merkmalen.

Die Erfindung wird nachfolgend in Ausführungsbeispielen an Hand der zugehörigen Zeichnungen näher erläutert. Es zeigen:
- Figur 1: einen Verfahrensablauf zur chemischen Modifizierung einer alkylgruppenhaltigen Flüssigkeit und
- Figur 2: eine schematische Darstellung einer Anordnung zur Durchführung des Verfahrens.

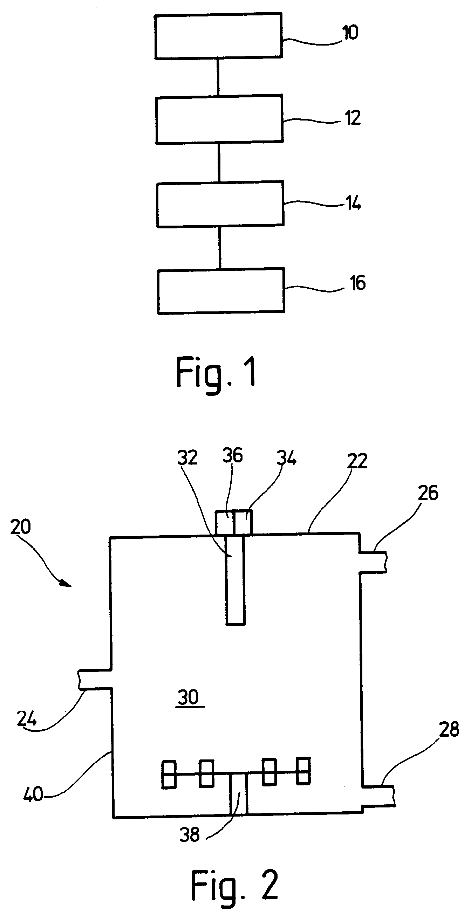

In der Figur 1 soll das erfindungsgemäße Verfahren mit Hilfe eines Diagrammes verdeutlicht werden. In einem ersten Schritt werden als Ausgangsmaterialien zur Verfügung stehende alkylgruppenhaltige Flüssigkeiten vorbereitet. Während des Verfahrensschrittes 10 können den alkylgruppenhaltigen Flüssigkeiten Reaktanten, Hilfs- und/oder Zuschlagstoffe beigemischt werden. Weiterhin ist ein Blending verschiedener alkylgruppenhaltiger Flüssigkeiten möglich.

In einem nächsten Schritt 12 werden die für die Plasmabehandlung gewünschten Prozeßparameter und Prozeßgase eingestellt. Hierbei werden insbesondere die speziellen Kombinationen der Prozeßgase, das heißt, eine erste Behandlung mit einem Inertgasplasma, vorzugsweise mit Helium und/oder Argon, und die nachfolgende Behandlung mit einem Reaktionsgasplasma, vorzugsweise mit Sauerstoff und/oder Stickstoff, oder auch die Behandlung mit einem Plasma, das aus einem Gemisch der vorgenannten Gase erzeugt wird, festgelegt. Weiterhin erfolgt die Einstellung der zur Plasmaerzeugung im Vakuum notwendigen Hochfrequenzen und deren zeitliche Abfolge. So sind Varianten denkbar, in der erst mit einer niederen Frequenz, beispielsweise 13,56 MHz und anschließend mit einer höheren Frequenz, beispielsweise 2,45 GHz, eine Plasmabehandlung durchgeführt wird. Darüber hinaus ist eine alternierende Zugabe der Prozeßgase, also des Inertgases, des Reaktionsgases und/oder eines Gemisches aus einem Reaktionsgas und einem Inertgas möglich. Weiterhin kann eine alternierende, gegebenenfalls auch gleichzeitige Zuschaltung verschieden hoher Frequenzen vorgegeben werden. Im übrigen wird der gewünschte Prozeßdruck, der beispielsweise im Bereich zwischen 0,1 mbar bis 2 mbar liegt, eingestellt. Während der Plasmabehandlung kann der Prozeßdruck verfahrensbedingten Schwankungen unterliegen. Weiterhin wird die Behandlungsdauer festgelegt, mit der die Plasmabehandlung erfolgt. Diese beträgt beispielsweise zwischen 5 Sekunden und 15.000 Sekunden. Die genannten Prozeßparameter beziehungsweise Prozeßgase können untereinander in beliebiger Zusammenstellung variiert werden und sind insbesondere auf die Zusammensetzung der jeweils konkret vorliegenden alkylgruppenhaltigen Flüssigkeiten abgestimmt.

In einem nächsten Verfahrensschritt 14 erfolgt dann die Plasmabehandlung der alkylgruppenhaltigen Flüssigkeiten mit den im Verfahrensschritt 12 eingestellten Prozeßparametern beziehungsweise Prozeßbedingungen. Hierbei ist es denkbar, daß während der Plasmabehandlung eine Veränderung und/oder Anpassung der Prozeßparameter, beispielsweise durch eine Regelung, erfolgen kann. Weiterhin kann während des Verfahrensschrittes 14 die Flüssigkeit gemischt beziehungsweise verrührt werden. Hierdurch ist eine homogenere Durchmischung mit den über die Plasmabehandlung eingebauten reaktiven beziehungsweise nichtreaktiven Gruppen möglich. Darüber hinaus kann die Flüssigkeit während der Plasmabehandlung temperiert werden. Durch gezielte Temperierung der Flüssigkeit ist es auch möglich, die Viskosität während der Plasmabehandlung zu verändern, beispielsweise zu erhöhen oder zu erniedrigen, um so den Einbau der reaktiven beziehungsweise nichtreaktiven Gruppen über die Plasmabehandlung zu beeinflussen.

In einem nächsten Verfahrensschritt 16 wird die Flüssigkeit weiterverarbeitet. Diese Weiterverarbeitung kann beispielsweise in einem Konfektionieren, Versprühen, Beschichten, Eintrocknen usw. bestehen. Im Rahmen der hier vorliegenden Beschreibung soll jedoch auf Einzelheiten einer Weiterverarbeitung der modifizierten Schmelze nicht näher eingegangen werden.

In der Figur 2 ist schematisch eine Anlage zur chemischen Modifizierung von alkylgruppenhaltigen Flüssigkeiten gezeigt. Die Anlage ist allgemein mit 20 bezeichnet und stark vereinfacht dargestellt. Die Anlage 20 besitzt einen Reaktor 22, der wenigstens eine Einlaßöffnung 24 für die zu modifizierenden alkylgruppenhaltigen Flüssigkeiten aufweist. Die Einlaßöffnung 24 kann auch zur Beigabe der Reaktanten, Hilfs- und/oder Zuschlagstoffe eingesetzt werden. Weiterhin besitzt der Reaktor 22 eine Einlaßöffnung 26 für Prozeßgase oder Plasmen. Die Einlaßöffnung 26 kann mehrere, hier nicht dargestellte Teileinlässe besitzen, über die entweder ein Inertgas, ein Reaktionsgas und/oder ein Gemisch eines Inertgases und eines Reaktionsgases oder entsprechende Plasmen in den Reaktor 22 führbar sind. Weiterhin besitzt der Reaktor 22 einen Auslaß 28 für die behandelten alkylgruppenhaltigen Flüssigkeiten. Der Reaktor 22 ist hermetisch abschließbar, so daß in einem Innenraum 30 des Reaktors 22 ein Vakuum erzeugbar ist, wobei hier auf Einzelheiten nicht weiter eingegangen werden soll. In den Innenraum 30 ragt eine Elektrode 32, die mit einem Generator 34 zur Mikrowellenplasmaanregung und einer Hochfrequenzeinspeisung 36 gekoppelt ist. Die Elektrode 32 kann aus mehreren Teilelektroden bestehen, wobei eine für die Mikrowellenplasmaanregung und eine für die Hochfrequenzeinspeisung ausgelegt sein kann. Die Form der Elektrode 32 kann beispielsweise stabförmig, kugelförmig, halbschalenförmig usw. sein. Weiterhin ist in dem Innenraum 30 eine Rühreinrichtung 38 angeordnet. Die Rühreinrichtung 38 ist lediglich optional vorhanden, so daß deren Vorhandensein für die erfindungsgemäße chemische Modifizierung nicht erforderlich ist. Darüber hinaus kann der Reaktor 22 beheizbar sein, entweder über seinen Außenmantel 40 oder über die Rühreinrichtung 38, die entsprechende Heizelemente aufweisen kann.

Die hier dargestellte Anordnung 20 ist lediglich beispielhaft und kann durch jede andere geeignete Anordnung ersetzt werden, mittels der eine Durchführung des erfindungsgemäßen Verfahrens erfolgen kann.

Die in Figur 2 gezeigte Anlage 20 übt folgende Funktion aus:

Über die Einlaßöffnung 24 wird der Reaktor 22 mit der alkylgruppenhaltigen Flüssigkeit beschickt. Anschließend wird mittels der Elektrode 32 unter gleichzeitiger Zufuhr eines Prozeßgases über die Einlaßöffnung 26 eine Plasmabehandlung der Flüssigkeit durchgeführt. Die Elektrode 32 kann hierbei abwechselnd mit unterschiedlich hohen Frequenzen angeregt werden. Hierzu wird diese abwechselnd mit dem Generator 34 oder der Hochfrequenzeinspeisung 36 gekoppelt. Gegebenenfalls sind zwei Elektroden 32 vorhanden, wobei jeweils eine der Elektroden mit dem Generator 34 und die jeweils andere mit der Hochfrequenzeinspeisung 32 gekoppelt ist. Diese können nun alternierend zugeschaltet werden. Das über die Eintrittsöffnung 26 zugeführte Prozeßgas führt bekannterweise zum Entstehen eines Plasmas innerhalb des Innenraumes 30 des Reaktors 22. Je nach Zusammensetzung des Prozeßgases wird ein unterschiedliches Plasma erzeugt. Hierbei kann über die Einlaßöffnung 26 sowohl ein Inertgas, ein Reaktionsgas oder Gemisch eines Inertgases und eines Reaktionsgases oder ein entsprechendes Plasma dem Reaktor 22 zugeführt werden. Die Einlaßöffnung 26 ist so ausgelegt, daß über hier nicht näher zu betrachtende Stelleinrichtungen die Zufuhr des Inertgases und/oder des Reaktionsgases und/oder des Gemisches aus dem Inertgas und Reaktionsgas oder des entsprechenden Plasmas während der Plasmabehandlung variiert werden kann. Das heißt, für unterschiedlich lange Zeiträume sind unterschiedlich große Mengen des jeweils benötigten Prozeßgases beziehungsweise Plasmas dem Reaktor 22 zuführbar.

Nach Beendigung der Plasmabehandlung der Flüssigkeit wird diese über die Auslaßöffnung 28 aus dem Reaktor 22 entfernt. Die aus der Auslaßöffnung 28 austretende Flüssigkeit kann nunmehr einer weiteren Verarbeitung beziehungsweise Bearbeitung zugeführt werden. Im Rahmen der vorliegenden Beschreibung soll jedoch auf diese Möglichkeit nicht weiter eingegangen werden.

Nach einer weiteren Verfahrensvariante kann die alkylgruppenhaltige Flüssigkeit separat in einen Behälter gefüllt werden, der dann durch eine geeignete Einlaßöffnung in den Reaktor 22 eingebracht wird. Nach erfolgter Plasmabehandlung der Flüssigkeit kann dieser Behälter wiederum aus dem Reaktor 22 entnommen werden, so daß auf die Einlaßöffnung 24 und die Auslaßöffnung 28 verzichtet werden kann. Durch diese Variante ist der Aufbau des Reaktors 22 ausschließlich auf die Erzeugung des Plasmas optimierbar.

Nach einer weiteren Verfahrensweise ist es denkbar, den Reaktor 22 im Durchlaufprinzip zu betreiben. Das heißt, über die Einlaßöffnung 24 werden kontinuierlich alkylgruppenhaltige Flüssigkeiten zugeführt. Die Flüssigkeit wird innerhalb eines für die Plasmabehandlung ausgelegten Abschnittes des Reaktors 22 der Plasmabehandlung unterzogen und anschließend über die Auslaßöffnung 28 entnommen.

Die hier erläuterten unterschiedlichen Verfahrensvarianten zur Plasmabehandlung einer alkylgruppenhaltigen Flüssigkeit sind lediglich beispielhaft. Es soll verdeutlicht werden, daß der konkrete Aufbau einer Anlage 20 zur Durchführung des erfindungsgemäßen Verfahrens sehr vielfältig sein kann. Entscheidend ist, daß die alkylgruppenhaltigen Flüssigkeiten einer Plasmabehandlung unterzogen werden.

## Patentansprüche

1. Verfahren zum chemischen Modifizieren von alkylgruppenhaltigen Flüssigkeiten, **dadurch gekennzeichnet**, daß die alkylgruppenhaltigen Flüssigkeiten einer Plasmabehandlung, unter Anwesenheit einer Prozeßgasatmosphäre, die den Einbau polarer sauerstoff- und/oder stickstoffhaltiger Gruppen unter Beibehaltung der chemischen Grundstruktur gestattet, in einem Frequenzbereich von 10 kHz bis 10 GHz unterzogen werden.

2. Verfahren nach Anspruch 1, **dadurch gekennzeichnet,** daß die Plasmabehandlung mit einer konstanten Frequenz durchgeführt wird.

3. Verfahren nach einem der vorhergehenden Ansprüche, **dadurch gekennzeichnet**, daß die Plasmabehandlung mit wechselnden Frequenzen durchgeführt wird.

4. Verfahren nach einem der vorhergehenden Ansprüche, **dadurch gekennzeichnet**, daß die Plasmabehandlung mit Kombinationen verschieden hoher, wechselnder Frequenzen durchgeführt wird.

5. Verfahren nach einem der vorhergehenden Ansprüche, **dadurch gekennzeichnet**, daß die Plasmabehandlung unter Zufuhr mindestens eines Inertgases, beispielsweise Helium und/oder Argon, durchgeführt wird.

6. Verfahren nach einem der vorhergehenden Ansprüche, **dadurch gekennzeichnet**, daß die Plasmabehandlung unter Zufuhr mindestens eines Reaktionsgases, beispielsweise Sauerstoff und/oder Stickstoff und/oder Monomeren durchgeführt wird.

7. Verfahren nach einem der vorhergehenden Ansprüche, **dadurch gekennzeichnet**, daß die Plasmabehandlung nacheinander mit wenigstens einem Inertgasplasma, wenigstens einem Reaktionsgasplasma oder einem Reaktionsgasgemischplasma oder unter Zufuhr eines Gemisches aus wenigstens einem Inertgas und wenigstens einem Reaktionsgas zugeführt wird.

8. Verfahren nach einem der vorhergehenden Ansprüche, **gekennzeichnet durch** eine alternierende Plasmabehandlung mit wenigstens einem Inertgasplasma, wenigstens einem Reaktionsgasplasma und wenigstens einem Gemisch eines Inertgas-Reaktionsgas-Plasmas.

9. Verfahren nach einem der vorhergehenden Ansprüche, **dadurch gekennzeichnet**, daß den alkylgruppenhaltigen Flüssigkeiten vor und/oder Während und/oder nach der Plasmabehandlung feste und/oder flüssige Reaktanten, Hilfs- und Zuschlagstoffe beigemischt werden.

10. Verfahren nach einem der vorhergehenden Ansprüche, **dadurch gekennzeichnet**, daß vor und/oder während und/oder nach der Plasmabehandlung eine Compoundierung vorgenommen wird.

11. Verfahren nach einem der vorhergehenden Ansprüche, **dadurch gekennzeichnet**, daß vor und/oder während und/oder nach der Plasmabehandlung ein Blending vorgenommen wird.

12. Verfahren nach einem der vorhergehenden Ansprüche, **dadurch gekennzeichnet**, daß die Plasmabehandlung bei einem Prozeßdruck von 0,1 mbar bis 2 mbar erfolgt.

13. Verfahren nach einem der vorhergehenden Ansprüche, **dadurch gekennzeichnet**, daß die Dauer der Plasmabehandlung zwischen 5 Sekunden und 15.000 Sekunden beträgt.

14. Verfahren nach einem der vorhergehenden Ansprüche, **dadurch gekennzeichnet**, daß die alkylgruppenhaltigen Flüssigkeiten während der Plasmabehandlung gemischt/verrührt werden.

## Claims

1. A process for chemically modifying liquids containing alkyl groups, characterised in that the liquids containing alkyl groups are subjected to a plasma treatment in a frequency range of 10 kHz to 10 GHz, in the presence of a process gas atmosphere which permits the incorporation of polar groups containing oxygen and/or nitrogen, whilst maintaining the chemical basic structure.

2. A process according to claim 1, characterised in that the plasma treatment is carried out at a constant frequency.

3. A process according to any one of the preceding claims, characterised in that the plasma treatment is carried out at varying frequencies.

4. A process according to any one of the preceding claims, characterised in that the plasma treatment is carried out at combinations of different levels of varying frequencies.

5. A process according to any one of the preceding claims, characterised in that the plasma treatment is carried out under supply of at least one inert gas, for example helium and/or argon.

6. A process according to any one of the preceding claims, characterised in that the plasma treatment is carried out under supply of at least one reaction gas, for example oxygen and/or nitrogen and/or monomers.

7. A process according to any one of the preceding claims, characterised in that the plasma treatment is supplied in succession with at least one inert gas plasma, at least one reaction gas plasma or one reaction gas mixture plasma, or under supply of a mixture of at least one inert gas and at least one reaction gas.

8. A process according to any one of the preceding claims, characterised by an alternating plasma treatment with at least one inert gas plasma, at least one reaction gas plasma and at least one mixture of an inert-gas reaction-gas plasma.

9. A process according to any one of the preceding claims, characterised in that before and/or during and/or after the plasma treatment, solid and/or liquid reactants, auxiliary agents and aggregate agents are mixed in with the liquids containing alkyl groups.

10. A process according to any one of the preceding claims, characterised in that a compounding is carried out before and/or during and/or after the plasma treatment.

11. A process according to any one of the preceding claims, characterised in that a blending is carried out before and/or during and/or after the plasma treatment.

12. A process according to any one of the preceding claims, characterised in that the plasma treatment takes place at a process pressure of 0.1 mbar to 2 mbar.

13. A process according to any one of the preceding claims, characterised in that the duration of the plasma treatment is between 5 seconds and 15 000 seconds.

14. A process according to any one of the preceding claims, characterised in that the liquids containing alkyl groups are mixed/stirred during the plasma treatment.

## Revendications

1. Procédé de modification chimique de liquides contenant des groupes alkyle, caractérisé en ce que les liquides contenant des groupes alkyle sont soumis à un traitement au plasma en présence d'une atmosphère formée par des gaz de traitement, qui permet la formation de groupes polaires contenant de l'oxygène et/ou de l'azote en conservant leur structure chimique fondamentale, en utilisant une gamme de fréquences comprise entre 10 kHz et 10 GHz.

2. Procédé selon la revendication 1, caractérisé en ce que le traitement au plasma est réalisé en utilisant une fréquence constante.

3. Procédé selon l'une des revendications précédentes, caractérisé en ce que le traitement au plasma est réalisé en utilisant des fréquences variables.

4. Procédé selon l'une des revendications précédentes, caractérisé en ce que le traitement au plasma est réalisé en utilisant des combinaisons de différentes hautes fréquences variables.

5. Procédé selon l'une des revendications précédentes, caractérisé en ce que le traitement au plasma est réalisé avec un apport d'au moins un gaz inerte, par exemple de l'hélium et/ou de l'argon.

6. Procédé selon l'une des revendications précédentes, caractérisé en ce que le traitement au plasma est réalisé avec un apport d'au moins un gaz de réaction, par exemple de l'oxygène et/ou de l'azote et/ou des monomères.

7. Procédé selon l'une des revendications précédentes, caractérisé en ce que le traitement au plasma est réalisé par apport successif d'au moins un plasma de gaz inerte, au moins un plasma de gaz de réaction ou un plasma d'un mélange de gaz de réaction, ou par apport d'un mélange d'au moins un gaz inerte et au moins un gaz de réaction.

8. Procédé selon l'une des revendications précédentes, caractérisé par un traitement au plasma alterné utilisant au moins un plasma de gaz inerte, au moins un plasma de gaz de réaction et au moins un mélange de plasmas de gaz inerte-gaz de réaction.

9. Procédé selon l'une des revendications précédentes, caractérisé en ce que sont ajoutés aux liquides contenant des groupes alkyle, avant et/ou pendant et/ou après le traitement au plasma, des réactifs solides et/ou liquides, des auxiliaires de traitement ou des adjuvants.

10. Procédé selon l'une des revendications précédentes, caractérisé en ce qu'une composition est réalisée avant et/ou pendant et/ou après le traitement au plasma.

11. Procédé selon l'une des revendications précédentes, caractérisé en ce qu'un mélange dosé est réalisé avant et/ou pendant et/ou après le traitement au plasma.

12. Procédé selon l'une des revendications précédentes, caractérisé en ce que le traitement au plasma est réalisé à une pression de traitement comprise entre 0,1 mbar et 2 mbar.

13. Procédé selon l'une des revendications précédentes, caractérisé en ce que la durée du traitement au plasma est comprise entre 5 secondes et 15 000 secondes.

14. Procédé selon l'une des revendications précédentes, caractérisé en ce que les liquides contenant des groupes alkyle sont mélangés/agités pendant le traitement au plasma.
